# FASCICULE DE BREVET EUROPEEN

(11) **EP 1 729 879 B1**
(45) Date de publication et mention de la délivrance du brevet: **16.03.2016**
(21) Numéro de dépôt: 05746951.2
(22) Date de dépôt: 30.03.2005
(51) Int. Cl.: B01J 20/18

(54) **COMPOSITION ZEOLITIQUE ADSORBANTE, SON PROCEDE DE PREPARATION ET SON UTILISATION POUR L'ELIMINATION DE H2O ET/OU CO2 ET/OU H2S CONTENUS DANS DES MELANGES GAZEUX OU LIQUIDES**
ABSORBIERENDE ZEOLITHISCHE ZUSAMMENSETZUNG, VERFAHREN ZU DEREN VORBEREITUNG UND VERWENDUNG ZUM ENTFERNEN VON IN GAS ODER FLÜSSIGKEITSGEMISCHEN ENTHALTENEM H2O UND/ODER CO2 UND/ODER H2S
ZEOLITHIC ADSORBING COMPOSITION, METHOD FOR THE PREPARATION AND THE USE THEREOF FOR REMOVING H2O AND/OR CO2 AND/OR H2S CONTAINED IN GAS OR LIQUID MIXTURES

(30) Priorité: 31.03.2004 FR 0403371
(43) Date de publication de la demande: 13.12.2006
(73) Titulaire: CECA S.A., 92250 La Garenne Colombes (FR)
(72) Inventeur: LE BEC, Rémi, F-64170 Labastide Cezeracq (FR); NICOLAS, Serge, F-64140 Lons (FR)
(74) Mandataire: Lhoste, Catherine
(86) Numéro de dépôt international: PCT/FR2005/000780
(87) Numéro de publication internationale: WO 2005/094985

(56) Documents cités:
- WO-A-97/10314
- WO-A-03/053546
- US-A- 3 411 888
- US-A- 4 329 160
- US-A- 4 935 580
- US-A- 5 164 076
- US-A- 5 938 819
- US-A1- 2002 014 457
- DATABASE WPI Section Ch, Week 200223 Derwent Publications Ltd., London, GB; Class H04, AN 2002-172318 XP002297141 & CN 1 179 461 A (CHINA PETRO-CHEM CORP) 22 avril 1998 (1998-04-22)
- ACKLEY M W ET AL: "Application of natural zeolites in the purification and separation of gases" MICROPOROUS AND MESOPOROUS MATERIALS, ELSEVIER SCIENCE PUBLISHING, NEW YORK, US, vol. 61, no. 1-3, 18 juillet 2003 (2003-07-18), pages 25-42, XP004437458 ISSN: 1387-1811

## Description

### DOMAINE TECHNIQUE

L'invention concerne des compositions zéolitiques utilisables notamment pour l'adsorption d'eau et éventuellement d'H₂S et/ou CO₂ contenus dans des mélanges gazeux ou liquides.

### TECHNIQUE ANTERIEURE

L'utilisation de zéolites, appelées également tamis moléculaires, est largement répandue dans les procédés de purification de gaz, notamment lorsqu'il s'agit d'éliminer sélectivement des molécules telles que l'eau ou l'H₂S. On procède ainsi à l'adsorption de ces molécules sur ces solides poreux. Ceux-ci sont ensuite régénérés par une étape de désorption opérée généralement par le passage d'un gaz chaud sur ces solides. Lors de ces différentes étapes, des réactions secondaires peuvent se produire, et c'est notamment le cas de la réaction suivante lorsque le gaz (par exemple le gaz naturel) contient à la fois H₂S et CO₂:

H₂S + CO₂ → COS + H₂O

Bien que cette réaction soit assez lente, elle peut être favorisée par déplacement thermodynamique, l'eau étant adsorbée par la zéolite, et par effet catalytique.

D'après P.H.Turnock et al., Proceedings of the Gas Conditioning Conference (1972), 22, B*,* le taux de formation de COS dépend de la nature du tamis moléculaire, notamment de sa structure cristalline, de sa composition, des matières premières et du liant utilisés, et de son mode de fabrication. Plusieurs exemples sont donnés mais sans révéler la nature de ces zéolites : certaines zéolites adsorbant bien l'H₂S mais formant beaucoup de COS, d'autres formant peu de COS mais adsorbant très peu d'H₂S.

Cines et al., C.E.P. (August 1976), p 89, montre que dans des conditions identiques, une zéolite 13X (ou NaX) forme plus de COS qu'une zéolite 4A (ou NaA) , qui elle-même en forme plus qu'une zéolite 5A (ou CaA). Ceci est corroboré par Lutz W. et al., Gas Separation & Purification (1990), Vol 4, p 190 et dans Separation Technology, edited by E.F. Vansant (1994), p143 *,* qui montrent que cette réaction est favorisée par des zéolites échangées au cation sodium. Fellmuth et al., Zeolites (1987), Vol 7, p 367 précise que cela est particulièrement vrai lorsque le taux de cation sodium est supérieur à 60% pour la zéolite X et supérieur à 40% pour la zéolite A.

Trent R.E. et al., Proceedings Laurence Reid Gas Conditioning Conference (1993), 43rd, 239-60*,* enseigne qu'une zéolite 3A (KA) forme moins de COS qu'une zéolite 4A (NaA).

Le COS, bien que moins corrosif et toxique que l'H₂S, n'est pas désiré dans le gaz naturel à but commercial, car il peut, en présence de traces d'humidité, reformer de l'H₂S corrosif. Par ailleurs, dans les unités de traitement de gaz naturel lorsque l'on procède à la récupération des coupes d'hydrocarbures par liquéfaction, le COS se retrouve dans la coupe propane de part sa proximité de point d'ébullition. Par exemple, un gaz contenant 2% de propane doit avoir moins de 0,1 ppmv de COS si on souhaite avoir moins de 5 ppmv dans le propane liquéfié. Il faut donc limiter la formation du COS lors du traitement du gaz sur zéolite si l'on souhaite éviter d'avoir à retraiter ensuite le propane liquéfié.

Dans certains cas de procédés, on utilise une zéolite pour éliminer à la fois l'eau et l'H₂S contenus dans le gaz. On utilise alors plutôt un tamis moléculaire de type 5A aggloméré avec un liant de type argileux, qui favorise le moins possible la réaction de formation de COS, mais il est difficile d'éviter totalement sa formation. On peut citer EP 783.362 au nom de la demanderesse qui décrit une telle solution technique.

Par ailleurs, il existe des unités où le gaz contenant H₂S et CO₂ n'est que déshydraté et non désulfuré : c'est par exemple le cas de gisements où la fraction liquide des hydrocarbures est exploitée et non la partie gazeuse. Dans ce cas, on pratique la ré-injection du gaz acide dans le gisement afin de permettre une meilleure exploitation de l'huile par maintien de la pression dans le réservoir naturel. Pour pouvoir procéder à la ré-injection du gaz acide, il faut cependant le déshydrater afin de protéger les compresseurs de l'unité contre la corrosion et/ou permettre leur transport par pipeline sans risque de formation d'hydrates de gaz. En général, il n'existe pas d'autres gaz disponibles sur site et on utilise donc également le gaz acide déshydraté comme gaz de régénération des adsorbants. Dans ce cas de figure, l'adsorbant est particulièrement sollicité puisque l'on est en atmosphère acide, chaude (> 250 °C) et humide, conditions favorables à la fois à la dégradation hydrothermale (perte de la cristallinité de la zéolite) et à l'attaque des liants argileux (dégradation mécanique). Ces deux phénomènes entraînent, sur les zéolites synthétiques classiques listées plus haut, une diminution rapide de la capacité d'adsorption et des augmentations de perte de charge, nécessitant un changement fréquent des charges.

Certaines zéolites naturelles sont connues pour pouvoir bien mieux résister dans ces conditions. Dans le livre « Natural zeolithes, Ed L.B. Sand & F.A. Mumpton, 1976 », p327, R.A. Sheppard indique que la mordénite ou la chabazite peuvent être utilisées pour éliminer H₂S, CO₂ ou l'eau d'un gaz acide, et en particulier la chabazite de Bowie vendue par UCC sous la dénomination AW 500. M.W. Ackley et al. (PRAXAIR), Microporous and mesoporous Materials, 61, p25 (2003*)* précise p32 que l'AW 500 est une chabazite agglomérée avec un liant.

Pour l'élimination de traces d'eau et de CO₂ contenues dans du gaz naturel, US 4.935.580 utilise de la clinoptilolite. US 5.164.076 enseigne que l'élimination d'H₂S contenu dans un gaz, à des températures de 150 à 220°C ; est plus efficace avec de la clinoptilolite qu'avec une zéolite 4A, les formes échangées Ba ou K de la clinoptilolite étant préférés car les formes Na et Ca n'adsorbent quasiment pas H₂S. Ceci est corroboré par A.Sirkecioglu et al., Sep. Sci. Technol. 30 (13), p 2747-2762 (1995*)* qui précise que toutes les formes cationiques de clinoptilolite adsorbent le SO₂ alors que l'H₂S est également bien adsorbé sur les formes K et H, mais très peu sur les formes Na et Ca.

Les documents US 3 411 888 et WO 03/053546 divulguent une composition zéolitique comprenant de la chabazite et de la clinoptilolite. Le document US 4 329 160 divulgue l'utilisation de zéolites A,X,Y ou chabazite associées à des cations afin d'éviter la formation de COS.

Dans la pratique industrielle, on constate que la clinoptilolite est peu utilisée pour le séchage de gaz car elle présente des capacités d'adsorption nettement plus faibles que d'autres zéolites, telle que par exemple la chabazite.

Il existe également d'autres applications nécessitant le séchage de gaz acides, de type H₂S pur ou de mélange H₂S-CO₂, lorsque ceux-ci sont utilisés comme gaz réactionnels, par exemple dans la synthèse des mercaptans. Afin que la synthèse de produits utilisant de tels gaz acides (par exemple synthèse de mercaptans) aboutisse à des produits les plus purs possibles, il est préférable également que la formation de sous-produits tels que le COS soit minimisée lors du séchage de ces gaz sur une zéolite. Il faut également qu'une telle zéolite résiste à ces conditions acides particulièrement sévères.

Les zéolites sont également employées pour le séchage ou la purification d'autres espèces chimiques comme les alcools, les mercaptans, etc, dans lesquelles on ne souhaite pas voir apparaître de sous-produits. Mais l'expérience prouve que cela peut arriver pour les mêmes raisons que celles évoquées pour le COS, à savoir le déplacement thermodynamique d'une réaction équilibrée par adsorption de l'eau ou de l'H₂S formés, couplé d'un éventuel effet catalytique de la zéolite. Ainsi peut-on voir se former des espèces telles que di-alkyl éther ou di-alkyl sulfure par les réactions suivantes :

2 ROH → ROR + H₂O

ou

2 RSH → RSR + H₂S

### EXPOSE DE L'INVENTION

L'invention concerne des compositions zéolitiques qui ne présentent pas les inconvénients mentionnés ci-dessus, à savoir qui ne favorisent pas les réactions secondaires, en particulier celles conduisant à la formation de COS lorsqu'elles sont mises en contact avec des mélanges gazeux contenant H₂S et CO₂.

Les compositions zéolitiques selon l'invention comprennent :
① au moins une zéolite qui peut être choisie parmi les zéolites A, X et/ou Y (qui sont des zéolites synthétiques) et/ou parmi les zéolites de type chabazite (qui sont des zéolites naturelles), et ce, quel que soi(en)t le (ou les) cation(s) associé(s) sur l'une et/ou l'autre de ces zéolites,
et ② au moins une zéolite de type clinoptilolite, et ce quel que soi(en)t le (ou les) cation(s) associé(s), ce(s) dernier(s) pouvant être différent(s) ou non de celui ou ceux de la zéolite ou des zéolites telles que définies sous ①.

La ou les zéolites telles que définies en ① représente au moins 50 %, et avantageusement entre 70 et 90 %, de la masse zéolitique totale de la composition selon l'invention, la ou les zéolites telles que définies en ② représentant jusqu'à 50 %, et avantageusement de 10 à 30%, de la masse zéolitique totale de ladite composition.

Les compositions zéolitiques selon l'invention peuvent se présenter sous forme de poudre mais de préférence se présentent sous de billes, d'extrudés ou de filés, et de manière générale sous forme d'agglomérés de granulométrie moyenne en général inférieure ou égale à plusieurs mm.

La présente invention a également pour objet un procédé d'obtention des compositions zéolitiques décrites précédemment.

Les compositions zéolitiques selon l'invention sous forme de poudre peuvent être simplement préparées par mélange intime de poudres de zéolites ① et ②.

Pour la préparation des compositions zéolitiques selon l'invention sous forme d'agglomérés, on peut partir de mélange intime pulvérulent de zéolites ① et ② que l'on agglomère par des moyens connus de l'homme de l'art, par exemple sous forme de billes ou d'extrudés, avec ou, de manière préférentielle, sans l'aide d'un liant argileux additionnel, la clinoptilolite jouant le rôle de liant.

Dans ce cas, on ajoute au mélange de poudres de zéolites ① et ② uniquement un peu d'eau additionnelle pour former une pâte homogène, et éventuellement un ou plusieurs additifs d'aide à la mise en forme, comme par exemple de la carboxy méthyl cellulose ou du lignosulfonate. Après cette mise en forme, les compositions zéolitiques sont ensuite séchées, activées selon les méthodes classiques de l'homme de l'art.

Les différentes phases zéolitiques peuvent être identifiées selon leur spectre de rayons X.

La granulométrie moyenne de ces compositions zéolitiques agglomérées est généralement de l'ordre de 0,4 mm à 5 mm, et avantageusement de 1 à 3 mm.

Les compositions zéolitiques selon l'invention comprenant au moins de la chabazite et au moins de la clinoptilolite présentent l'avantage supplémentaire de résister particulièrement bien aux conditions acides, plus spécifiquement en présence de gaz à la fois chauds (température d'environ 200-300 °C) et/ou humides (saturés en eau) et/ou acides (contenant de fortes teneurs en H₂S et/ou CO₂, typiquement de l'ordre de plusieurs pourcents) Par rapport à une zéolite de type chabazite comme l'AW 500 agglomérée avec une argile, elles présentent une capacité d'adsorption d'eau accrue d'environ 10 %.

La présente invention concerne également l'utilisation des compositions zéolitiques décrites ci-dessus pour l'adsorption d'eau et éventuellement d'H₂S et/ou CO₂ contenus dans des mélanges gazeux ou liquides, et notamment contenus dans du gaz naturel et dans des gaz acides.

Lorsqu'on souhaite éliminer à la fois l'eau et l'H₂S d'un gaz naturel peu acide (< 1% H₂S), tout en évitant de former du COS, on peut plus particulièrement utiliser une composition zéolitique selon l'invention à base de zéolite 5A et de clinoptilolite et/ou encore une composition zéolitique selon l'invention à base de chabazite et de clinoptilolite.

Lorsqu'on souhaite éliminer simplement l'eau d'un gaz naturel peu acide (< 1% H₂S), tout en évitant de former du COS, on peut utiliser n'importe quelle composition zéolitique selon l'invention, et préférentiellement une composition selon l'invention à base de zéolite 3A et de clinoptilolite.

Lorsqu'on souhaite éliminer l'eau d'un gaz naturel très acide (> 1% H₂S), voire d'un gaz composé essentiellement d'H₂S et CO₂, tout en évitant de former du COS, on utilisera une composition selon l'invention à base de zéolite 3A et de clinoptilolite, et de préférence une composition selon l'invention à base de chabazite et de clinoptilolite qui permet d'obtenir la meilleure résistance aux gaz acides.

Les compositions zéolitiques selon l'invention peuvent également être employées pour le séchage d'autres espèces chimiques comme les alcools, les mercaptans, etc., pour lesquelles on ne souhaite pas voir apparaître de sous-produits. Pour de telles applications, on préfère utiliser des compositions selon l'invention à base de zéolite 3A et de clinoptilolite.

### Manières de réaliser l'invention

Dans les exemples 1 à 3 ci-dessous, on illustre l'invention pour la déshydratation d'un gaz acide contenant à la fois H₂S et CO₂. Dans l'exemple 4, on illustre l'invention pour la déshydratation d'un alcool.

On compare plusieurs zéolites et compositions zéolitiques de qualités et origines différentes dont les caractéristiques principales sont listées dans le tableau 1. Tous ces produits testés sont utilisés sous forme de filés de 1,6 mm de diamètre ; ils sont tous utilisés après une étape d'activation à 550 °C.

Les caractéristiques de ces zéolites sont déterminées selon les méthodes classiques. Les densités apparentes sont mesurées sur produit non-tassé. Les capacités d'adsorption d'eau, dites H50, sont mesurées par une méthode statique où la zéolite est mise dans une enceinte fermée pendant 24 h en équilibre avec une atmosphère contrôlée à 50 % d'humidité relative à température ambiante. On note la capacité d'adsorption d'eau par différence de pesée.

Sauf indication contraire, les proportions dans les exemples sont des proportions pondérales.

A titre de référence, on utilise 2 zéolites commerciales, à savoir la zéolite 3A vendue par CECA sous la dénomination commerciale NK 30 constituée de 80 % de zéolite 3A (KA, taux d'échange potassique = 42 %) et de liant argileux et la zéolite de type chabazite vendue sous la dénomination AW 500 par UOP.

**Tableau 1**

| Nom | NK30 | AW 500 | CHA-i | CHA -a | CHA -b | CHA -c | CHA -d |
|---|---|---|---|---|---|---|---|
| structure zéolitique de type ① | 80% 3A | chabazite k | 80% chabazite i | 80% chabazite i | 80% chabazite i | 80% chabazite i | 85% chabazite i |
| liant ou structure zéolitique de type ② | 20% argile | argile | 20% argile | 20% clinoptilolite a | 20% clinoptilolite b | 20% clinoptilolite c | 15% clinoptilolite d |
| densité apparente (g/cm³) | 0,8 | 0,68 | 0,64 | 0,55 | 0,53 | 0,54 | 0,50 |
| H50 (% poids) | 21,6 | 15 | 15 | 16,8 | 17,5 | 16,3 | 18,7 |
| Résistance mécanique (kg) | 3 | 4,5 | 4,5 | 1,8 | 1,7 | 1,6 | 2,5 |

Les différentes zéolites naturelles citées dans le tableau précédent (chabazites et clinoptlilolites) proviennent de sources différentes ; leurs caractéristiques sont réunies dans le tableau 2 ci-dessous.

**Tableau 2**

| | H50 | Al₂O₃ (%) | CaO (%) | Fe₂O₃ (%) | K₂O (%) | MgO (%) | Na₂O (%) | SiO₂ (%) |
|---|---|---|---|---|---|---|---|---|
| AW500 | 15 | 17,21 | 5,55 | 4,24 | 1,30 | 1,35 | 3,08 | 66,74 |
| chabazite i | 19 | 18,08 | 0,73 | 3,80 | 1,27 | 0,92 | 9,48 | 65,42 |
| clinoptilolite a | 9,6 | 12,8 | 6,98 | 1,5 | 4,03 | 4,1 | 0,71 | 68 |
| clinoptilolite b | 10,5 | 12,4 | 3,32 | 0,75 | 3,91 | 0,68 | 1,26 | 76,9 |
| clinoptilolite c | 9,1 | 12,1 | 2,86 | 1,2 | 1,8 | 1,3 | 2,84 | 76,4 |
| clinoptilolite d | 10,2 | 14,68 | 3,39 | 1,59 | 4,58 | 1,27 | 0,74 | 73,16 |

### Exemple 1 : Formation de COS

Ce test permet de mesurer la formation de COS lors du séchage d'un gaz naturel contenant à la fois de l'H₂S et du CO₂. Ce test est conduit sur un pilote qui reproduit des conditions très proches d'une exploitation industrielle.

### Composition du gaz à traiter :

- Gaz naturel CH₄ + 10% de C₂₊ (éthane, propane, butane)
- H₂S = 2 %
- CO₂=4%
- H₂O = 1500 vpm

### Colonne :

Hauteur d'adsorbant = 148 cm

### Conditions d'Adsorption :

P = 58 bars
T=43°C
Débit tel que la vitesse linéaire v = 0,11 m/s
Durée = jusqu'à une concentration en eau en sortie de 70 vpm.

### Conditions de désorption :

P = 40 bars
T = jusqu'à 280 °C
Débit tel que la vitesse linéaire v = 0,46 m/s,
à contre-courant de l'adsorption
Durée = 1 h de montée ; 3h de palier ; 6h de refroidissement.

Pendant l'étape d'adsorption, la teneur en eau en sortie de colonne est contrôlée par un analyseur d'humidité de marque Panamétrics et les teneurs en H₂S, CO₂ et COS sont contrôlées par un chromatographe en ligne.

La teneur en eau est inférieure à 1 ppmv (limite de détection de l'appareil) jusqu'à la percée que l'on suit jusqu'à une valeur de 70 ppmv. Les teneurs en COS peuvent varier pendant l'étape d'adsorption notamment du fait de l'évolution du front d'adsorption de l'eau dans la colonne. Sont reportées dans le tableau 3 suivant, les valeurs maximales en COS mesurées lors de ces essais sur les différents produits testés. Ces valeurs ont été mesurées sur plusieurs cycles, et dans tous les cas au moins après deux cycles d'adsorption :

**Tableau 3**

| Nom | NK30 | AW 500 | CHA-i | CHA-a | CHA -b | CHA -c | CHA -d |
|---|---|---|---|---|---|---|---|
| COS maxi (ppmv) | 300 | > 450 | > 450 | < 70 | < 70 | 80 | 150 |

| | | | | | | | |
|---|---|---|---|---|---|---|---|
| NB : les valeurs > ou < indiquent un dépassement de la zone précise d'étalonnage du COS. | | | | | | | |

A titre indicatif, on calcule la valeur théorique de concentration en COS maximum obtenue si l'équilibre thermodynamique est atteint sans adsorption d'eau (équilibre en phase gazeuse) qui est égale à 55 ppmv ; pour ce calcul, on utilise la constante d'équilibre thermodynamique K = 3,842.10⁻⁶ à 43 °C selon les travaux de E.Terres et al., Angewandte Chemie, 1932, N°52-53, p 795*.*

On observe que tous les adsorbants conventionnels dépassent largement cette dernière valeur, ce qui est une preuve du déplacement de l'équilibre par l'adsorption de l'eau. Un tamis 3A, même s'il n'adsorbe pas H₂S et O₂, forme jusqu'à 300 ppmv de COS, une chabazite agglomérée avec un liant argileux forme plus de 450 ppmv de COS. La même chabazite mais agglomérée avec une clinoptilolite dans une composition selon l'invention forme beaucoup moins de COS : 150 ppmv (CHA-d) voire moins (CHA-a à CHA-c).

### Exemple 2 : Capacités d'adsorption d'eau

Outre les valeurs de H50 réunies dans le Tableau 1 qui illustrent les performances de ces zéolites et des compositions zéolitiques testées et le Tableau 2 montre qu'une clinoptilolite seule n'a qu'un H50 de 9-10), on calcule les capacités d'adsorption d'eau qui sont exprimées en poids d'eau adsorbée par unité de volume de zéolite et ont été calculées à partir des courbes de percée en eau jusqu'à la valeur de 10 ppmv. On calcule une moyenne sur les cycles 5 à 25. Les résultats sont donnés dans le Tableau 4 ci-dessous en termes de performance comparative par rapport au NK30 :

**Tableau 4**

| Nom | NK30 | AW500 | CHA-i | CHA -d |
|---|---|---|---|---|
| Performance relative | 1 | 0,64 | 0,66 | 0,89 |

On constate que les chabazites agglomérées avec une argile ne réalisent que 64-66 % des performances d'une zéolite 3A, alors qu'une composition selon l'invention (CHA-d) atteint 89% des performances de la zéolite 3A.

### Exemple 3 : Résistance aux gaz acides

Les échantillons des différents adsorbants sont déchargés de la colonne du pilote au niveau de l'une des 3 zones : entrée des gaz (E), milieu de colonne (M) et sortie des gaz (S). Puis chaque échantillon est caractérisé selon sa résistance mécanique et son taux de fines (< 0,8mm) formées. Les résultats de résistance mécanique sont exprimés en % par rapport à la valeur du produit d'origine. Ils sont reportés dans le Tableau 5 suivant :

**Tableau 5**

| Nom | NK30 | | | CHA-i | | | CHA-d | | |
|---|---|---|---|---|---|---|---|---|---|
| Zone de l'échantillon | E | M | S | E | M | S | E | M | S |
| Taux de fines (% poids) | 4,5 | 0,4 | 0,1 | 1,3 | 0,2 | 0,1 | 2,5 | 0,4 | 0,3 |
| Evolution de la résistance mécanique (%) | 46 | 50 | 73 | 73 | 76 | 60 | 72 | 84 | 80 |

On constate que la zéolite 3A se détériore plus vite mécaniquement ; les essais pilote ont d'ailleurs dû être stoppés à cause d'une augmentation trop importante de la perte de charge rendant impossible la poursuite des essais. On constate que les résultats sont particulièrement dramatiques dans la zone (E) d'entrée des gaz, qui correspond à la zone la plus saturée en gaz chaud humide (et acide) lors de l'étape de désorption thermique opérée à contre-courant.

La CHA-d selon l'invention suit une évolution similaire à la CHA-i agglomérée à base d'argile, c'est-à-dire sans détérioration plus rapide de sa résistance mécanique. Sur ces 2 produits, les essais ont pu être poursuivis après rechargement dans la colonne pilote sans aucun problème d'augmentation de perte de charge.

### Exemple 4 : Réaction avec l'éthanol

On compare la réactivité d'un tamis NK30 commercial décrit dans le Tableau 1, avec une composition zéolitique selon l'invention constituée de 80% de zéolite 3A et 20% de clinoptilolite a dont les caractéristiques sont indiquées dans le Tableau 2.

On place dans un réacteur tubulaire de 63 cm de hauteur et 1,5 cm de diamètre 80 g d'adsorbant. On chauffe ce réacteur sous azote à pression atmosphérique de telle sorte que la température à l'intérieur du lit d'adsorbant atteigne 130 °C. On envoie un débit de 135 ml/h de liquide constitué à 96 % d'éthanol et 4 % d'eau. Ce liquide se vaporise dans la colonne ; l'eau s'adsorbe sur le solide provoquant un léger échauffement de celle-ci de l'ordre de 30 °C. En sortie de réacteur, on dispose d'un condenseur réfrigéré à -35°C afin de piéger correctement tous les composés volatiles ayant pu se former au contact du solide. Des échantillons sont recueillis par fraction puis analysés par chromatographie gazeuse couplée spectrométrie de masse. Les produits détectés sont essentiellement de l'acétaldéhyde, du diéthyl éther et de l'oxyde d'éthylène.

Les teneurs en impuretés (exprimées en mg/l) obtenues
*pour le tamis NK30 commercial sont réunies dans le Tableau 6 suivant :

**Tableau 6**

| Temps de prélèvement (min) | acétaldéhyde | oxyde d'éthylène | diéthyl éther |
|---|---|---|---|
| 40 | 280 | 27 | 4 |
| 70 | 57 | 19 | 5 |
| 100 | 25 | 11 | 6 |
| 130 | 6 | < LD | 2 |
| 160 | 4 | < LD | 2 |
| 170 | 3 | < LD | = LD |

| | | | |
|---|---|---|---|
| LD : limite de détection | | | |

* et dans le Tableau 7 suivant pour le tamis 3A aggloméré avec 20% de clinoptilolite selon l'invention :

**Tableau 7**

| Temps de prélèvement (min) | Acétaldéhyde | Oxyde d'éthylène | Diéthyl éther |
|---|---|---|---|
| 32 | 27 | < LD | 4 |
| 47 | 12 | < LD | = LD |
| 62 | 12 | < LD | < LD |
| 92 | 9 | < LD | < LD |
| 122 | 6 | < LD | < LD |
| 152 | 3 | < LD | < LD |

| | | | |
|---|---|---|---|
| LD : limite de détection | | | |

## Revendications

1. Composition zéolitique comprenant :
① au moins une zéolite choisie parmi les zéolites synthétiques A, X et/ou Y et/ou parmi les zéolites naturelles de type chabazite, et ce, quel que soi(en)t le (ou les) cation(s) associé(s) sur l'une et/ou l'autre de ces zéolites,
et ② au moins une zéolite de type clinoptilolite, et ce quel que soi(en)t le (ou les) cation(s) associé(s), ce(s) dernier(s) pouvant être différent(s) ou non de celui ou ceux de la zéolite ou des zéolites telles que définies sous ①,
**caractérisée en ce que** la ou les zéolites telles que définies en ① représente au moins 50% de la masse zéolitique totale de la composition selon l'invention, et la ou les zéolites telles que définies en ② représente jusqu'à 50% de la masse zéolitique totale de ladite composition.

2. Composition selon la revendication 1, **caractérisée en ce que** la ou les zéolites telles que définies en ① représente entre 70 et 90% de la masse zéolitique totale de la composition selon l'invention, la ou les zéolites telles que définies en ② représentant de 10 à 30%, de la masse zéolitique totale de ladite composition.

3. Composition selon la revendication 1 ou 2, **caractérisée en ce qu'**elle se présente sous forme de poudre.

4. Composition selon la revendication 1 ou 2, **caractérisée en ce qu'**elle se présente sous forme d'objet agglomérés, de granulométrie moyenne de préférence comprise entre environ 0,4 mm à 5 mm, et avantageusement comprise entre environ 1 à 3 mm.

5. Procédé de préparation d'une composition telle que définie à la revendication 3 par mélange intime de poudres de zéolites ① et ②.

6. Procédé de préparation d'une composition telle que définie à la revendication 4 par mélange intime de poudres de zéolites ① et ②, suivi d'une étape d'agglomération avec ou de préférence sans liant d'agglomération, et éventuellement en présence d'eau et d'un ou plusieurs additifs de mise en forme puis d'une étape de séchage et d'activation.

7. Utilisation d'une composition zéolitique telle que définie dans les revendications 1 à 4 pour l'élimination de H₂O et/ou CO₂ et/ou H₂S contenu(s) dans des mélanges gazeux ou liquides.

8. Utilisation selon la revendication 7 pour le séchage et/ou l'élimination de H₂O et/ou CO₂ et /ou H₂S contenu(s) dans du gaz naturel et/ou des gaz acides.

9. Utilisation selon la revendication 8 pour l'élimination d'eau et d'H₂S contenus dans un gaz naturel peu acide d'une composition zéolitique à base de zéolite 5A (①) et de clinoptilolite (②) et/ou d'une composition à base de chabazite (①) et de clinoptilolite(②).

10. Utilisation selon la revendication 8 pour l'élimination d'eau contenue dans un gaz naturel très acide ou dans un gaz composé essentiellement d'H₂S et CO₂ d'une composition à base de zéolite 3A (①) et de clinoptilolite (②), et de préférence d'une composition à base de chabazite (①) et de clinoptilolite (②).

11. Utilisation selon la revendication 7 pour l'élimination de H₂O et/ou CO₂ et/ou H₂S contenu(s) dans des alcools et/ou des mercaptans.

## Patentansprüche

1. Zeolithzusammensetzung, umfassend:
① mindestens einen Zeolith, ausgewählt aus synthetischen A-, X- und/oder Y-Zeolithen und/oder aus natürlichen Zeolithen vom Chabasit-Typ, und zwar unabhängig von dem Kation bzw. den Kationen, das bzw. die mit dem einen und/oder dem anderen dieser Zeolithe assoziiert ist bzw. sind,
und ② mindestens einen Zeolith vom Klinoptilolith-Typ, und zwar unabhängig von dem assoziierten Kation bzw. den assoziierten Kationen, wobei letzteres bzw. letztere von demjenigen bzw. denjenigen des Zeoliths bzw. der Zeolithe gemäß der unter ① angegebenen Definition verschieden sein kann bzw. können oder nicht,
**dadurch gekennzeichnet, dass** der Zeolith bzw. die Zeolithe gemäß ① mindestens 50% der gesamten Zeolithmasse der erfindungsgemäßen Zusammensetzung ausmacht bzw. ausmachen und der Zeolith bzw. die Zeolithe gemäß ② bis zu 50% der gesamten Zeolithmasse der Zusammensetzung ausmacht bzw. ausmachen.

2. Zusammensetzung nach Anspruch 1, **dadurch gekennzeichnet, dass** der Zeolith bzw. die Zeolithe gemäß ① zwischen 70 und 90% der gesamten Zeolithmasse der erfindungsgemäßen Zusammensetzung ausmacht bzw. ausmachen, wobei der Zeolith bzw. die Zeolith gemäß ② 10 bis 30% der gesamten Zeolithmasse der Zusammensetzung ausmacht bzw. ausmachen.

3. Zusammensetzung nach Anspruch 1 oder 2, **dadurch gekennzeichnet, dass** sie in Pulverform vorliegt.

4. Zusammensetzung nach Anspruch 1 oder 2, **dadurch gekennzeichnet, dass** sie in Form von agglomerierten Objekten mit einer bevorzugten mittleren Teilchengröße zwischen ungefähr 0,4 mm bis 5 mm und vorteilhafterweise zwischen ungefähr 1 bis 3 mm vorliegt.

5. Verfahren zur Herstellung einer Zusammensetzung gemäß Anspruch 3 durch inniges Mischen von Pulvern von Zeolithen ① und ②.

6. Verfahren zur Herstellung einer Zusammensetzung gemäß Anspruch 4 durch inniges Mischen von Pulvern von Zeolithen ① und ②, gefolgt von einem Agglomerationsschritt mit oder vorzugsweise ohne Agglomerationsbindemittel und gegebenenfalls in Gegenwart von Wasser und einem oder mehreren Formgebungsadditiven und dann von einem Trocknungs- und Aktivierungsschritt.

7. Verwendung einer Zeolithzusammensetzung gemäß den Ansprüchen 1 bis 4 zur Entfernung von H₂O und/oder CO₂ und/oder H₂S, das bzw. die in gasförmigen oder flüssigen Gemischen enthalten ist bzw. sind.

8. Verwendung nach Anspruch 7 zur Trocknung und/oder Entfernung von H₂O und/oder CO₂ und/oder H₂S, das bzw. die in Erdgas und/oder sauren Gasen enthalten ist bzw. sind.

9. Verwendung nach Anspruch 8 einer Zeolithzusammensetzung auf Basis von 5A-Zeolith (①) und Klinoptilolith (②) und/oder einer Zusammensetzung auf Basis von Chabasit (①) und Klinoptilolith (②) zur Entfernung von Wasser und H₂S, die in einem wenig sauren Erdgas enthalten sind.

10. Verwendung nach Anspruch 8 einer Zusammensetzung auf Basis von 3A-Zeolith (①) und Klinoptilolith (②) und vorzugsweise einer Zusammensetzung auf Basis von Chabasit (①) und Klinoptilolith (②) zur Entfernung von Wasser, das in einem sehr sauren Erdgas oder in einem im Wesentlichen aus H₂S und CO₂ bestehenden Gas enthalten ist.

11. Verwendung nach Anspruch 7 zur Entfernung von H₂O und/oder CO₂ und/oder H₂S, das bzw. die in Alkoholen und/oder Mercaptanen enthalten ist bzw. sind.

## Claims

1. Zeolitic composition comprising:
① at least one zeolite selected from A, X and/or Y synthetic zeolites and/or from natural zeolites of the chabazite type, regardless of the associated cation or cations on one and/or the other of these zeolites,
and ② at least one zeolite of the clinoptilolite type, and regardless of the associated cation or cations, which may be different or not from that or those of the zeolite or zeolites as defined in ①,
**characterized in that** the zeolite or zeolites as defined in ① accounts for at least 50% of the total zeolitic mass of the composition of the invention, the zeolite or zeolites as defined in ② accounting for up to 50% of the total zeolitic mass of said composition.

2. Composition according to Claim 1, **characterized in that** the zeolite or zeolites as defined in ① accounts for between 70% and 90% of the total zeolitic mass of the composition of the invention, the zeolite or zeolites as defined in ② accounting for between 10% and 30% of the total zeolitic mass of said composition.

3. Composition according to either of Claims 1 and 2, **characterized in that** it is in powder form.

4. Composition according to either of Claims 1 and 2, **characterized in that** it is in the form of agglomerated objects, with a preferable average particle size distribution of between about 0.4 mm and 5 mm, and advantageously of between about 1 and 3 mm.

5. Method for preparing a composition according to Claim 3, by intimate mixing of powders of zeolites ① and ②.

6. Method for preparing a composition according to Claim 4, by intimate mixing of powders of zeolites ① and ②, followed by an agglomeration step with or, preferably, without binder, and optionally in the presence of water and of one or more shaping additives, followed by a drying and activation step.

7. Use of a zeolitic composition according to Claims 1 to 4, for removing H₂O and/or CO₂ and/or H₂S present in gas or liquid mixtures.

8. Use according to Claim 7, for drying and/or removing H₂O and/or CO₂ and/or H₂S present in natural gas and/or acid gases.

9. Use according to Claim 8, for removing water and H₂S present in a low acid natural gas, of a zeolitic composition based on 5A zeolite (①) and clinoptilolite (②) and/or of a composition based on chabazite (①) and clinoptilolite (②).

10. Use according to Claim 8 for removing water present in a high acid natural gas or in a gas essentially composed of H₂S and CO₂, of a composition based on 3A zeolite (①) and clinoptilolite (②), and preferably of a composition based of chabazite (①) and clinoptilolite (②).

11. Use according to Claim 7, for removing H₂O and/or CO₂ and/or H₂S present in alcohols and/or mercaptans.
